(19)

Europäisches Patentamt
European Patent Office
Office européen des brevets

(11) **EP 3 293 158 A1**

(12) **EUROPEAN PATENT APPLICATION**

(43) Date of publication:
14.03.2018 Bulletin 2018/11

(51) Int Cl.:
*C03C 3/087* (2006.01)  *C03C 4/02* (2006.01)
*C03C 4/08* (2006.01)

(21) Application number: 17001507.7

(22) Date of filing: 07.09.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 09.09.2016 JP 2016176180
31.08.2017 JP 2017166411

(71) Applicant: **ASAHI GLASS COMPANY, LIMITED Tokyo 100-8405 (JP)**

(72) Inventor: **Akada, Shuichi Tokyo, 100-8405 (JP)**

(74) Representative: **Müller-Boré & Partner Patentanwälte PartG mbB Friedenheimer Brücke 21 80639 München (DE)**

(54) **ULTRAVIOLET ABSORBING GLASS**

(57) The present invention provides an ultraviolet absorbing glass that is suitable as dark grey glass and has an extremely low ultraviolet transmittance, and at the same time has a low visible light transmittance and favorable solubility, and is low in raw material costs. The ultraviolet absorbing glass has a visible light transmittance (TVA) based on a standard illuminant A at a sheet thickness of 2.8 mm being 8% to 25%, and has an ultraviolet transmittance (TUV400) defined by ISO 13837:2008 convention A at a sheet thickness of 2.8 mm being 2.0% or less.

EP 3 293 158 A1

**EP 3 293 158 A1**

**Description**

TECHNICAL FIELD

The present invention relates to ultraviolet absorbing glass that is suitable as dark grey glass for vehicles (particularly automobiles).

BACKGROUND ART

As rear-side glass and rear glass for automobiles, dark grey-colored glass having a significantly-reduced visible light transmittance (so-called dark grey glass or privacy glass) has been put into practical use. This privacy glass is excellent in indoor comfort and reduction of air-conditioning loads due to favorable sunlight shielding performance in a wide wavelength region from the ultraviolet region through the infrared region, and is excellent in terms of possible options of color tone imparting luxury feelings, designability that is excellent from the design viewpoint, in-vehicle privacy protection, and the like.

In recent years, there has been an intensifying interest in ultraviolet countermeasures. In order to cope with this interest, there is a demand for privacy glass having a lower ultraviolet transmittance.

Patent Document 1 discloses ultraviolet absorbing glass that has an ultraviolet transmittance defined by ISO 9050:2003 at a sheet thickness of 3.5 mm being 2% or less and is suitable as privacy glass for vehicles.

In addition, Patent Document 2 discloses an ultraviolet shielding glass sheet that has an ultraviolet transmittance defined by ISO 9050:1990 at a thickness of from 1 mm to 5 mm being 1.5% or less.

In addition, Patent Document 3 discloses glass having an ultraviolet transmittance measured in accordance with a Parry Moon Air Mass=2 at a thickness of 4 mm being 10% or less.

Patent Document 1: WO 2015/088026
Patent Document 2: WO 2016/088374
Patent Document 3: US-A-2004/0038799

SUMMARY OF THE INVENTION

In recent years, for privacy glass for vehicles, there has been a demand for extremely low ultraviolet transmittances. In addition, there is a demand for low visible light transmittances in order to protect privacy in vehicles. However, the conventional ultraviolet absorbing glasses disclosed by Patent Documents 1 to 3 have high visible light transmittances, poor solubility, or high raw material costs.

In order to cope with the above-described problems, an object of the present invention is to provide ultraviolet absorbing glass that is suitable as dark grey glass for vehicles and has an extremely low ultraviolet transmittance, and at the same time has a low visible light transmittance and favorable solubility, and is low in raw material costs.

In order to achieve the above-described object, ultraviolet absorbing glass of the present invention contains, in terms of percent by mass based on oxides:

| | |
|---|---|
| $SiO_2$ | 62% to 75%, |
| $Na_2O$ | 10% to 20%, |
| CaO | 5% to 15%, |
| MgO | 0 to 6%, |
| $Al_2O_3$ | 0 to 5%, |
| $K_2O$ | 0 to 5%, |
| FeO | 0.13% to 0.9%, |
| total iron in terms of $Fe_2O_3$ | 1.2% to 2.8%, |
| $TiO_2$ | 1.3% to 5%, |
| $CeO_2$ | 0 to 0.4%, |
| CoO | 0.01% to 0.05%, |
| Se | 0 to 0.007%, |
| $Cr_2O_3$ | 0 to 0.08%, and |
| NiO | 0 to 0.2%, |

satisfies a product (FeO×$TiO_2$) of the content of FeO and the content of $TiO_2$ being 1.1 to 4.5,

has a visible light transmittance (TVA) based on a standard illuminant A at a sheet thickness of 2.8 mm being 8% to 25%, and

has an ultraviolet transmittance (TUV400) defined by ISO 13837:2008 convention A at a sheet thickness of 2.8 mm being 2.0% or less.

The ultraviolet absorbing glass of the present invention achieves an extremely low ultraviolet transmittance, has a low visible light transmittance and favorable solubility, and is low in raw material costs.

MODE FOR CARRYING OUT THE INVENTION

Hereinafter, ultraviolet absorbing glass according to an embodiment of the present invention will be described in detail.

In the present specification, TE refers to the energy transmittance obtained by JIS-R3106:1998, TUV400 refers to the ultraviolet transmittance obtained by ISO 13837:2008 convention A, and TUV380 refers to the ultraviolet transmittance obtained by ISO 9050:2003. In addition, TVA refers to the visible light transmittance obtained by using the standard illuminant A at two-degree visual field, $\lambda D$ refers to the principal wavelength obtained by using the standard illuminant C at two-degree visual field, and Pe refers to the excitation purity obtained by using the standard illuminant C at two-degree visual field.

The ultraviolet absorbing glass according to the embodiment of the present invention contains, in terms of percent by mass based on oxides,

| | |
|---|---|
| $SiO_2$ | 62% to 75%, |
| $Na_2O$ | 10% to 20%, |
| CaO | 5% to 15%, |
| MgO | 0 to 6%, |
| $Al_2O_3$ | 0 to 5%, |
| $K_2O$ | 0 to 5%, |
| FeO | 0.13% to 0.9%, |
| total iron in terms of $Fe_2O_3$ | 1.2% to 2.8%, |
| $TiO_2$ | 1.3% to 5%, |
| $CeO_2$ | 0 to 0.4%, |
| CoO | 0.01% to 0.05%, |
| Se | 0 to 0.007%, |
| $Cr_2O_3$ | 0 to 0.08%, and |
| NiO | 0 to 0.2%, |

satisfies a product ($FeO \times TiO_2$) of the content of FeO and the content of $TiO_2$ being 1.1 to 4.5,

has a visible light transmittance (TVA) based on a standard illuminant A at a sheet thickness of 2.8 mm being 8% to 25%, and

has an ultraviolet transmittance (TUV400) defined by ISO 13837:2008 convention A at a sheet thickness of 2.8 mm being 2.0% or less.

The above-described numerical ranges expressed by using "to" include numerical values before and after the "to" as the lower limit value and the upper limit value, and, hereinafter in the present specification, unless particularly otherwise described, "to" will be used in the same manner.

The reasons for the present invention containing the above-described components will be described below. Unless particularly otherwise described, "%" used to express the contents of the respective components indicates percent by mass in terms of oxide.

$SiO_2$ is a component that forms networks, and is an essential component. In the case where the content of $SiO_2$ is 62% or more, the weather resistance becomes favorable, and, in the case where the content is 75% or less, the viscosity does not become too high and thus, the meltability is favorable. The content of $SiO_2$ is preferably 65% or more and more preferably 67% or more. In addition, the content of $SiO_2$ is preferably 72% or less and more preferably 70% or less.

$Na_2O$ is a component that accelerates the melting of raw materials, and is an essential component. In the case where the content of $Na_2O$ is 10% or more, the melting of raw materials is accelerated and, in the case where the content is 20% or less, the weather resistance does not become poor. The content of $Na_2O$ is preferably 11% or more and more preferably 12% or more. In addition, the content of $Na_2O$ is preferably 18% or less and more preferably 16% or less.

CaO is a component that accelerates the melting of raw materials and improves the weather resistance, and is an essential component. In the case where the content of CaO is 5% or more, the melting of raw materials is accelerated and the weather resistance is improved and, in the case where the content is 15% or less, devitrification is suppressed. The content of CaO is preferably 6% or more and more preferably 7% or more. In addition, the content of CaO is preferably 13% or less and more preferably 11% or less.

MgO is a component that accelerates the melting of raw materials and improves the weather resistance, and is an optional component. In the case where the content of MgO is 6% or less, devitrification is suppressed. The content of MgO is preferably 5% or less and more preferably 4.6% or less. In the case where MgO is contained, the content of MgO is preferably 1% or more, more preferably 2% or more, and still more preferably 3% or more.

$Al_2O_3$ is a component that improves the weather resistance, and is an optional component. In the case where the content of $Al_2O_3$ is 5% or less, the viscosity does not become too high and thus, the melting progresses well. The content is preferably 4% or less and more preferably 3% or less. In the case where $Al_2O_3$ is contained, the content of $Al_2O_3$ is preferably 0.5% or more and more preferably 1% or more.

$K_2O$ is a component that accelerates the melting of raw materials, and is an optional component. In the case where the content of $K_2O$ is 5% or less, damage on refractories of melting kilns due to volatilization is suppressed. The content is preferably 4% or less and more preferably 3% or less. In the case where $K_2O$ is contained, the content of $K_2O$ is preferably 0.1% or more and more preferably 0.3% or more.

FeO, which is an oxide of bivalent iron, is a component that absorbs thermal energy, and is an essential component. In the case where the content of FeO is 0.13% or more, a sufficiently low TE can be obtained. On the other hand, in the case where the content is 0.9% or less, the thermal efficiency during melting does not deteriorate, and basis materials are suppressed from stagnating at the bottom portion of melting furnaces, which is far from heating sources. The content of FeO is preferably 0.20% or more, more preferably 0.25% or more, still more preferably 0.30% or more, particularly preferably 0.35% or more, and most preferably 0.40% or more. In addition, the content of FeO is preferably 0.7% or less, more preferably 0.6% or less, still more preferably 0.55% or less, and particularly preferably 0.5% or less.

In the case where the content of the total iron in terms of $Fe_2O_3$ (i.e., the content of the total iron including the above-described FeO and $Fe_2O_3$ that is an oxide of trivalent iron described below; hereinafter, also referred to as t-$Fe_2O_3$) is 1.2% or more, it is possible to decrease TVA, TUV380 and TUV400. In the case where t-$Fe_2O_3$ is 2.8% or less, TVA does not become too low. That is, TVA is within an appropriate range. In addition, in the case where t-$Fe_2O_3$ is 2.8% or less, the thermal efficiency during melting does not deteriorate and basis materials are suppressed from stagnating at the bottom portion of melting furnaces, which is far from heating sources, and thus the solubility is favorable. t-$Fe_2O_3$ is preferably 1.5% or more, more preferably 1.7% or more, still more preferably 1.9% or more, and particularly preferably 2.0% or more. In addition, t-$Fe_2O_3$ is preferably 2.6% or less, more preferably less than 2.4%, still more preferably 2.3% or less, particularly preferably 2.2% or less, and most preferably 2.1% or less.

$TiO_2$ is a component that decreases the ultraviolet transmittances (TUV380 and TUV400), and is an essential component. In addition, $TiO_2$ has an effect of decreasing the viscosity of basis materials during melting and has an action of suppressing the stagnation of the basis materials. In the case where the content of $TiO_2$ is 1.3% or more, it is possible to decrease the ultraviolet transmittances. The content of $TiO_2$ is preferably 1.8% or more, more preferably 2% or more, still more preferably 2.2% or more, and particularly preferably 2.4% or more. In addition, in the case where the content of $TiO_2$ is 5% or less, the visible light transmittance is not excessively decreased. The content of $TiO_2$ is preferably 4.5% or less, more preferably 4.1 % or less, still more preferably 3.8% or less, and particularly preferably 3.5% or less.

$CeO_2$ is a component that decreases the ultraviolet transmittances (TUV380 and TUV400), and is an optional component. $CeO_2$ has a high raw material cost. In the case where the content of $CeO_2$ is 0.4% or less, it is possible to reduce the raw material costs. The content of $CeO_2$ is preferably 0.3% or less, more preferably 0.2% or less, and still more preferably 0.1% or less, and it is particularly preferable that $CeO_2$ is not substantially contained. Here, the phrase "not substantially contained" means that the ultraviolet absorbing glass does not contain $CeO_2$ except for inevitable impurities and specifically means that the content of $CeO_2$ is 0.01% or less. In the case where $CeO_2$ is contained, in order to decrease the ultraviolet transmittances, the content of $CeO_2$ is preferably 0.03% or more, more preferably 0.05% or more, and still more preferably 0.1 % or more.

CoO is a component that tints glass bluish, and is an essential component. In the case where the content of CoO is 0.01 % or more, the tone of glass is suppressed from appearing yellowish and, in the case where the content is 0.05% or less, the tone of glass is suppressed from appearing excessively bluish. The content of CoO is preferably 0.012% or more, more preferably 0.015% or more, still more preferably 0.02% or more, and particularly preferably 0.025% or more. In addition, the content of CoO is preferably 0.045% or less, more preferably 0.04% or less, still more preferably 0.035% or less, and particularly preferably 0.030% or less.

Se is a component that adjusts the color of glass, and is an optional component. In the case where the content of Se is 0.007% or less, glass is suppressed from appearing yellowish. In addition, the influence of appearing reddish is small. The content of Se is preferably 0.005% or less, more preferably 0.004% or less, still more preferably 0.003% or less, particularly preferably 0.002% or less, and most preferably 0.0015% or less. In the case where Se is contained, the content of Se is preferably 0.0003% or more, more preferably 0.0005% or more, and still more preferably 0.001% or more.

$Cr_2O_3$ is a component that decreases the visible light transmittance, also is a component that tints glass greenish, and is an optional component. In the case where the content of $Cr_2O_3$ is 0.08% or less, the visible light transmittance is suppressed from being excessively decreased. The content of $Cr_2O_3$ is preferably 0.03% or less, more preferably 0.025% or less, still more preferably 0.02% or less, and particularly preferably 0.015%. In the case where $Cr_2O_3$ is contained, the content of $Cr_2O_3$ is preferably 0.001% or more, more preferably 0.005% or more, and still more preferably 0.01% or more.

NiO is a component that tints glass brownish, and is an optional component. In the case where the content of NiO is 0.2% or less, glass does not appear excessively brownish. The content of NiO is preferably 0.1% or less, more preferably 0.05% or less, still more preferably 0.02% or less, and particularly preferably 0.01% or less. In the case where NiO is contained, the content of NiO is preferably 0.003% or more and more preferably 0.005% or more.

In the ultraviolet absorbing glass of the present invention, the product of the content of FeO and the content of $TiO_2$ (hereinafter, also referred to as $FeO \times TiO_2$) is 1.1 to 4.5. Due to the coexistence of FeO and $TiO_2$, ultraviolet absorbing performance due to the interaction between FeO and $TiO_2$ which is better than the sum of ultraviolet absorbing performance obtained from FeO and ultraviolet absorbing performance obtained from $TiO_2$ can be obtained. In the case where $FeO \times TiO_2$ is 1.1 or more, the ultraviolet absorbing performance due to the interaction between FeO and $TiO_2$ is significant, the ultraviolet transmittances (TUV380 and TUV400) can be decreased, TVA can be decreased, and furthermore, TE can be decreased. $FeO \times TiO_2$ is preferably 1.3 or more, more preferably 1.5 or more, still more preferably 1.8 or more, and particularly preferably 2 or more. In the case where $FeO \times TiO_2$ is 4.5 or less, TVA does not become too low. $FeO \times TiO_2$ is preferably 4 or less, more preferably 3.5 or less, and still more preferably 3 or less.

$Fe_2O_3$, which is an oxide of trivalent iron, is a component that absorbs ultraviolet rays. In addition, $Fe_2O_3$ is also a component that tints glass yellowish. The content of $Fe_2O_3$ is preferably 1% to 2.2%. In the case where the content of $Fe_2O_3$ is 1% or more, it is possible to decrease the ultraviolet transmittances (TUV380 and TUV400). The content of $Fe_2O_3$ is more preferably 1.2% or more, still more preferably 1.4% or more, and particularly preferably 1.5% or more. In addition, in the case where the content of $Fe_2O_3$ is 2.2% or less, TVA does not become too low. The content of $Fe_2O_3$ is more preferably 2.0% or less, still more preferably 1.9% or less, and particularly preferably 1.8% or less.

In the ultraviolet absorbing glass of the present invention, the value obtained by dividing $t$-$Fe_2O_3$ by the content of $TiO_2$ (hereinafter, also referred to as $t$-$Fe_2O_3/TiO_2$) is preferably 0.5 to 1.0. In the case where $t$-$Fe_2O_3/TiO_2$ is 0.5 or more, it is possible to decrease the ultraviolet transmittances (TUV380 and TUV400) while preventing TVA from becoming too low. $t$-$Fe_2O_3/TiO_2$ is more preferably 0.6 or more and still more preferably 0.7 or more. In the case where $t$-$Fe_2O_3/TiO_2$ is 1.0 or less, it is possible to decrease the ultraviolet transmittances (TUV380 and TUV400) while preventing TVA from becoming too large. $t$-$Fe_2O_3/TiO_2$ is more preferably 0.9 or less and still more preferably 0.8 or less.

In the ultraviolet absorbing glass of the present invention, the mass proportion of divalent iron in terms of $Fe_2O_3$ in the total iron in terms of $Fe_2O_3$ (hereinafter, also referred to as Fe-redox) is preferably 10% to 40%. In the case where Fe-redox is 10% or more, TE can be decreased. FE-redox is preferably 15% or more and more preferably 20% or more. In addition, in the case where Fe-redox is 40% or less, TVA does not become too low. Fe-redox is preferably 35% or less, more preferably 30% or less, and still more preferably 25% or less.

In the ultraviolet absorbing glass of the present invention, the combined amount of the content of CoO, the content of Se and the content of $Cr_2O_3$ (hereinafter, also referred to as $CoO+Se+Cr_2O_3$) is preferably less than 0.1%. In the case where $CoO+Se+Cr_2O_3$ is less than 0.1%, TVA does not become too low. $CoO+Se+Cr_2O_3$ is preferably 0.07% or less and more preferably 0.05% or less.

In addition, in the ultraviolet absorbing glass of the present invention, when the value represented by Expression (1) is indicated by A, A is preferably -2.0 or less.

$$-3.58 \times (Fe_2O_3) - 0.606 \times (TiO_2) \qquad (1)$$

Here, the expressions of the components surrounded by parentheses represent the contents of the corresponding components in the ultraviolet absorbing glass which are expressed in percent by mass. $(Fe_2O_3)$ is the content of the oxide of trivalent iron.

$Fe_2O_3$ and $TiO_2$ are components that absorb ultraviolet rays. In the case where A is -2.0 or less, it is possible to decrease the ultraviolet transmittances. A is more preferably -4.0 or less, still more preferably -5.0 or less, particularly preferably -6.0 or less, and most preferably -7.0 or less.

In actual production, clarificants such as salt cake may be used and, as a vestige, the ultraviolet absorbing glass of the present invention may contain $SO_3$ in a content of generally 0.05% to 0.5% and preferably 0.05% to 0.4%.

The ultraviolet absorbing glass of the present invention may contain, in addition to the above-described components, individual oxides of B, Ba, Sr, Li, Zn, Pb, P, Zr, Bi, and Sn. The contents of these oxides may be each 0 to 1% by mass. The total amount of these components is preferably 1% or less, more preferably 0.7% or less, still more preferably 0.4% or less, and particularly preferably 0.2% or less.

In addition, the ultraviolet absorbing glass of the present invention may contain an oxide of Sb or As and Cl or F. These components can be intentionally mixed into glass from a melting aid or a clarificant. Alternatively, these components may be contained as impurities in raw materials or cullet. The contents of these components may be each 0 to 0.1% by mass.

In addition, the ultraviolet absorbing glass of the present invention may contain individual oxides of Mn, Cu, Mo, Nd, and Er. The contents of these oxides may be each 0 to 0.1% by mass.

The ultraviolet absorbing glass of the present invention preferably does not substantially contain individual oxides of V and W. Here, the phrase "not substantially contain" means that the ultraviolet absorbing glass does not contain the oxides except for inevitable impurities and specifically means that the contents of the oxides are each 0.01% or less. The contents are preferably 0.005% or less, more preferably 0.003% or less, still more preferably 0.001% or less, and particularly preferably 0.0001 % or less.

The ultraviolet absorbing glass of the present invention is glass having the above-described composition and has optical characteristics as described below.

The ultraviolet absorbing glass of the present invention has TUV400 of 2.0% or less at a sheet thickness of 2.8 mm. TUV400 refers to the ultraviolet transmittance measured in a wavelength range of 400 nm or shorter and can be used to evaluate ultraviolet absorbing performance in a longer wavelength region than TUV380 which is measured in a wavelength range of 380 nm or shorter. In the case where TUV400 is 2.0% or less, it is possible to prevent, for example, sunburn of human beings or color changes of articles in vehicles. TUV400 is preferably 1.5% or less, more preferably 1.2% or less, still more preferably 1.0% or less, and particularly preferably 0.5% or less.

In addition, TVA at a sheet thickness of 2.8 mm is 8% to 25%. In the case where TVA is 8% or more, the outside is easily visible from inside of vehicles. TVA is preferably 10% or more, more preferably 12% or more, and still more preferably 16% or more. In addition, in the case where TVA is 25% or less, privacy in vehicles can be protected. TVA is preferably 24% or less and more preferably 20% or less.

In addition to the above-described optical characteristics, the ultraviolet absorbing glass of the present invention has TUV380 at a sheet thickness of 2.8 mm being preferably 0.5% or less. In the case where TUV380 is 0.5% or less, it is possible to prevent, for example, sunburn of human beings or color changes of articles in vehicles. TUV380 is more preferably 0.4% or less, still more preferably 0.3% or less, particularly preferably 0.2% or less, and most preferably 0.1 % or less.

In addition to the above-described optical characteristics, the ultraviolet absorbing glass of the present invention has TE at a sheet thickness of 2.8 mm being preferably 5% to 28%. In the case where TE is 5% to 28%, the interior temperature in vehicles does not easily increase. TE is more preferably 7% or more and still more preferably 10% or more. In addition, TE is more preferably 24% or less, still more preferably 20% or less, particularly preferably 18% or less, and most preferably 16% or less.

In addition to the above-described optical characteristics, the ultraviolet absorbing glass of the present invention has $\lambda$D at a sheet thickness of 2.8 mm being preferably 485 nm to 580 nm. $\lambda$D may be 490 nm or more and may be 500 nm or more. In addition, $\lambda$D may be 570 nm or less and may be 560 nm or less.

In addition to the above-described optical characteristics, the ultraviolet absorbing glass of the present invention has Pe at a sheet thickness of 2.8 mm being preferably 41 % or less. Pe is more preferably 35% or less, still more preferably 30% or less, and particularly preferably 25% or less.

In addition, in the ultraviolet absorbing glass of the present invention, in the case where the temperature T2 at which the viscosity reaches $10^2$ poise is 1,440°C or lower, there is an effect of facilitating the glass manufacturing. T2 is preferably 1,435°C or lower, more preferably 1,410°C or lower, and particularly preferably 1,400°C or lower.

The method for manufacturing the ultraviolet absorbing glass of the present invention is not particularly limited, and the ultraviolet absorbing glass can be manufactured, for example, as described below. Blended raw materials are continuously supplied to a melting furnace and are heated at approximately 1,500°C to perform vitrification. Next, this molten glass is clarified and then shaped to a glass sheet having a predetermined thickness b yusing a float method or the like. Next, this glass sheet is cut to a predetermined shape, thereby manufacturing the ultraviolet absorbing glass of the present invention. After that, as necessary, it is possible to carry out a reinforcement treatment such as physical reinforcement on the cut glass, process the cut glass to laminated glass, or process the cut glass to double-layer glass.

EXAMPLES

Hereinafter, the present invention will be specifically described by reference to examples, but the present invention is not limited to these examples.

A raw material batch was prepared by using silica sand, feldspar, dolomite, soda ash, salt cake, blast furnace slag, ferric oxide, titanium oxide, cerium oxide, cobalt oxide, sodium selenite, chromium oxide, and nickel oxide, as raw materials. As a matrix component, soda-lime silicate glass made up of $SiO_2$: 62 to 70, $Al_2O_3$: 1.8, CaO: 8.4, MgO: 4.6, $Na_2O$: 13.3, $K_2O$: 0.7, and $SO_3$: 0.2 (unit: % by mass) was used. The content of $SiO_2$ was adjusted so that the total of the matrix component and FeO, $Fe_2O_3$, $TiO_2$, $CeO_2$, CoO, Se, $Cr_2O_3$, and NiO, which were added thereto as optical components, reached 100% by mass, thereby producing the target composition. The batch was put into a platinum-rhodium-made crucible and melted in an electric furnace (in an atmosphere with an $O_2$ concentration of approximately 0.5%). The molten glass was caused to flow out on a carbon sheet, and then annealed in a separate electric furnace. The obtained glass block was cut into some pieces, a part of them was polished, and the composition was analyzed by using a fluorescent X-ray analyzer (scanning-type fluorescent X-ray analyzer ZSX100e manufactured by Rigaku Corporation). The surface of another piece was polished and finished to a mirrored surface and to a thickness of 2.8 mm, and the spectral transmittance was measured by using a spectral photometer. The content of FeO was obtained from the infrared transmittance at a wavelength of 1,000 nm by means of calculation. The content of $Fe_2O_3$ was computed on the basis of the content of the total iron oxides obtained by a fluorescent X-ray analysis and the above-described content of FeO.

In addition, the value A represented by Expression (1) was obtained according to the above-described procedure.

In addition, the visible light transmittance (TVA), the energy transmittance (TE), the ultraviolet transmittances (TUV380 and TUV400), the principal wavelength ($\lambda$D), and the excitation purity (Pe) were computed on the basis of the spectral transmittances.

Hereinafter, the contents and optical characteristics of absorption components in the obtained glass are shown in Table 1 to Table 4.

[Table 1]

| mass% | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| mass% | FeO | 0.44 | 0.37 | 0.36 | 0.35 | 0.37 | 0.38 | 0.38 | 0.40 | 0.45 | 0.45 | 0.46 |
| mass% | $Fe_2O_3$ | 1.50 | 1.60 | 1.58 | 1.59 | 1.56 | 1.58 | 1.67 | 1.64 | 1.49 | 1.48 | 1.59 |
| mass% | $t\text{-}Fe_2O_3$ | 1.99 | 2.01 | 1.98 | 1.98 | 1.97 | 2.00 | 2.10 | 2.08 | 1.99 | 1.98 | 2.10 |
| mass% | $TiO_2$ | 3.04 | 3.28 | 3.42 | 3.40 | 3.20 | 3.21 | 3.23 | 3.24 | 3.21 | 3.22 | 3.46 |
| mass% | $CeO_2$ | 0 | 0 | 0 | 0 | 0 | 0 | 0 | 0 | 0 | 0 | 0 |
| mass% | CoO | 0.0284 | 0.0284 | 0.0280 | 0.0280 | 0.0282 | 0.0282 | 0.0287 | 0.0280 | 0.0283 | 0.0280 | 0.0286 |
| mass% | Se | 0.0016 | 0.0019 | 0.0017 | 0.0018 | 0.0015 | 0.0012 | 0.0012 | 0.0010 | 0.0015 | 0.0015 | 0.0015 |
| mass% | $Cr_2O_3$ | 0.0100 | 0.0200 | 0.0102 | 0.0055 | 0.0102 | 0.0198 | 0.0103 | 0.0104 | 0.0101 | 0.0099 | 0.0103 |
| mass% | NiO | 0 | 0 | 0 | 0 | 0 | 0 | 0 | 0 | 0 | 0 | 0 |
| mass% | $CoO+Se+Cr_2O_3$ | 0.0400 | 0.0503 | 0.0399 | 0.0353 | 0.0399 | 0.0492 | 0.0402 | 0.0394 | 0.0399 | 0.0394 | 0.0404 |
| | $FeO \times TiO_2$ | 1.33 | 1.22 | 1.23 | 1.19 | 1.18 | 1.21 | 1.24 | 1.29 | 1.46 | 1.44 | 1.59 |
| | $t\text{-}Fe_2O_3/TiO_2$ | 0.66 | 0.61 | 0.58 | 0.58 | 0.62 | 0.62 | 0.65 | 0.64 | 0.62 | 0.62 | 0.61 |
| % | Fe-redox | 24.4 | 20.5 | 20.2 | 19.7 | 20.8 | 20.9 | 20.3 | 21.3 | 25.4 | 25.0 | 24.2 |
| | A | -7.23 | -7.71 | -7.73 | -7.75 | -7.53 | -7.61 | -7.95 | -7.82 | -7.26 | -7.26 | -7.79 |
| % | TVA | 16.4 | 16.5 | 17.8 | 18.2 | 18.5 | 18.9 | 18.3 | 19.1 | 16.1 | 16.5 | 15.4 |
| % | TE | 13.9 | 16.0 | 17.3 | 17.8 | 17.2 | 17.0 | 16.5 | 16.3 | 13.4 | 13.8 | 12.9 |
| % | TUV380 | 0.24 | 0.19 | 0.23 | 0.25 | 0.30 | 0.29 | 0.20 | 0.22 | 0.21 | 0.22 | 0.13 |
| % | TUV400 | 1.05 | 0.95 | 1.13 | 1.21 | 1.34 | 1.34 | 1.05 | 1.14 | 0.94 | 0.98 | 0.66 |
| nm | $\lambda D$ | 568.4 | 569.5 | 569.6 | 570.1 | 567.6 | 564.7 | 566.1 | 564.7 | 568.4 | 568.1 | 569.1 |
| % | Pe | 28.6 | 31.7 | 28.5 | 27.5 | 24.5 | 23.1 | 24.7 | 23.3 | 29.9 | 29.1 | 34.0 |

[Table 2]

| | | Ex. 12 | Ex. 13 | Ex. 14 | Ex. 15 | Ex. 16 | Ex. 17 | Ex. 18 | Ex. 19 | Ex. 20 | Ex. 21 | Ex. 22 |
|---|---|---|---|---|---|---|---|---|---|---|---|---|
| mass% | FeO | 0.47 | 0.48 | 0.49 | 0.46 | 0.48 | 0.49 | 0.51 | 0.47 | 0.45 | 0.47 | 0.48 |
| mass% | $Fe_2O_3$ | 1.57 | 1.56 | 1.55 | 1.58 | 1.55 | 1.54 | 1.52 | 1.58 | 1.58 | 1.56 | 1.55 |
| mass% | $t\text{-}Fe_2O_3$ | 2.09 | 2.09 | 2.09 | 2.09 | 2.08 | 2.08 | 2.08 | 2.10 | 2.08 | 2.08 | 2.08 |
| mass% | $TiO_2$ | 3.46 | 3.42 | 3.41 | 3.42 | 3.41 | 3.20 | 2.99 | 3.44 | 3.45 | 3.45 | 3.44 |
| mass% | $CeO_2$ | 0 | 0 | 0 | 0 | 0 | 0 | 0 | 0 | 0 | 0 | 0 |
| mass% | CoO | 0.0283 | 0.0270 | 0.0254 | 0.0283 | 0.0283 | 0.0288 | 0.0284 | 0.0211 | 0.0160 | 0.0277 | 0.0278 |
| mass% | Se | 0.0013 | 0.0015 | 0.0015 | 0.0014 | 0.0011 | 0.0015 | 0.0013 | 0.0013 | 0.0013 | 0.0007 | 0.0004 |
| mass% | $Cr_2O_3$ | 0.0104 | 0.0104 | 0.0101 | 0.0101 | 0.0103 | 0.0100 | 0.0099 | 0.0104 | 0.0105 | 0.0103 | 0.0101 |
| mass% | NiO | 0 | 0 | 0 | 0 | 0 | 0 | 0 | 0 | 0 | 0 | 0 |
| mass% | $CoO+Se+Cr_2O_3$ | 0.0400 | 0.0389 | 0.0370 | 0.0398 | 0.0397 | 0.0403 | 0.0396 | 0.0328 | 0.0278 | 0.0387 | 0.0383 |
| | $FeO\times TiO_2$ | 1.62 | 1.63 | 1.66 | 1.58 | 1.62 | 1.56 | 1.51 | 1.61 | 1.57 | 1.61 | 1.65 |
| | $t\text{-}Fe_2O_3/TiO_2$ | 0.60 | 0.61 | 0.61 | 0.61 | 0.61 | 0.65 | 0.70 | 0.61 | 0.60 | 0.60 | 0.61 |
| % | Fe-redox | 24.9 | 25.3 | 26.0 | 24.6 | 25.4 | 26.0 | 27.0 | 24.7 | 24.3 | 24.9 | 25.7 |
| | A | -7.71 | -7.66 | -7.61 | -7.72 | -7.62 | -7.45 | -7.25 | -7.74 | -7.73 | -7.68 | -7.62 |
| % | TVA | 15.8 | 15.9 | 16.1 | 16.1 | 16.4 | 16.2 | 16.0 | 18.8 | 21.8 | 17.8 | 18.6 |
| % | TE | 12.8 | 12.7 | 12.3 | 13.1 | 12.8 | 12.9 | 12.2 | 13.9 | 15.2 | 13.7 | 13.7 |
| % | TUV380 | 0.13 | 0.14 | 0.14 | 0.16 | 0.16 | 0.20 | 0.22 | 0.14 | 0.15 | 0.17 | 0.19 |
| % | TUV400 | 0.68 | 0.70 | 0.68 | 0.78 | 0.79 | 0.91 | 0.97 | 0.71 | 0.76 | 0.85 | 0.91 |
| nm | $\lambda D$ | 568.3 | 569.4 | 570.0 | 568.2 | 566.7 | 568.1 | 566.4 | 570.4 | 571.5 | 564.5 | 561.9 |
| % | Pe | 32.8 | 34.7 | 36.9 | 31.5 | 29.5 | 30.0 | 27.4 | 38.6 | 41.7 | 26.5 | 23.8 |

[Table 3]

| | | Ex. 23 | Ex. 24 | Ex. 25 | Ex. 26 | Ex. 27 | Ex. 28 | Ex. 29 | Ex. 30 | Ex. 31 | Ex. 32 | Ex. 33 |
|---|---|---|---|---|---|---|---|---|---|---|---|---|
| mass% | FeO | 0.47 | 0.46 | 0.46 | 0.47 | 0.47 | 0.48 | 0.55 | 0.33 | 0.42 | 0.46 | 0.45 |
| mass% | $Fe_2O_3$ | 1.56 | 1.57 | 1.56 | 1.57 | 1.55 | 1.55 | 1.57 | 1.72 | 1.79 | 1.73 | 1.85 |
| mass% | $t\text{-}Fe_2O_3$ | 2.08 | 2.08 | 2.07 | 2.09 | 2.07 | 2.08 | 2.18 | 2.08 | 2.26 | 2.24 | 2.35 |
| mass% | $TiO_2$ | 3.43 | 3.44 | 3.22 | 3.01 | 3.42 | 3.44 | 3.40 | 3.50 | 3.21 | 3.18 | 2.97 |
| mass% | $CeO_2$ | 0 | 0 | 0 | 0 | 0 | 0 | 0 | 0 | 0 | 0 | 0 |
| mass% | CoO | 0.0277 | 0.0280 | 0.0283 | 0.0290 | 0.0278 | 0.0370 | 0.0282 | 0.0276 | 0.0280 | 0.0279 | 0.0285 |
| mass% | Se | 0.0003 | 0.0000 | 0.0005 | 0.0004 | 0.0004 | 0.0004 | 0.0004 | 0.0004 | 0.0005 | 0.0005 | 0.0005 |
| mass% | $Cr_2O_3$ | 0.0098 | 0.0100 | 0.0104 | 0.0101 | 0.0022 | 0.0029 | 0.0026 | 0.0024 | 0.0005 | 0.0005 | 0.0008 |
| mass% | NiO | 0 | 0 | 0 | 0 | 0 | 0 | 0 | 0 | 0 | 0 | 0 |
| mass% | $CoO+Se+Cr_2O_3$ | 0.0378 | 0.0380 | 0.0392 | 0.0395 | 0.0304 | 0.0403 | 0.0312 | 0.0304 | 0.0290 | 0.0289 | 0.0298 |
| | $FeO×TiO_2$ | 1.60 | 1.59 | 1.47 | 1.40 | 1.59 | 1.65 | 1.85 | 1.14 | 1.35 | 1.47 | 1.35 |
| | $t\text{-}Fe_2O_3/TiO_2$ | 0.61 | 0.61 | 0.64 | 0.69 | 0.61 | 0.61 | 0.64 | 0.59 | 0.70 | 0.70 | 0.79 |
| % | Fe-redox | 24.8 | 24.7 | 24.4 | 24.8 | 25.0 | 25.6 | 27.8 | 17.4 | 20.6 | 22.9 | 21.5 |
| | A | -7.67 | -7.69 | -7.55 | -7.45 | -7.63 | -7.63 | -7.70 | -8.27 | -8.37 | -8.11 | -8.40 |
| % | TVA | 19.6 | 20.8 | 19.8 | 19.4 | 19.4 | 15.4 | 17.3 | 23.4 | 20.4 | 19.7 | 19.6 |
| % | TE | 14.6 | 15.2 | 15.0 | 14.6 | 14.6 | 12.8 | 11.8 | 21.3 | 16.5 | 14.9 | 15.1 |
| % | TUV380 | 0.20 | 0.23 | 0.27 | 0.28 | 0.20 | 0.19 | 0.14 | 0.27 | 0.21 | 0.21 | 0.20 |
| % | TUV400 | 1.00 | 1.12 | 1.23 | 1.28 | 1.00 | 0.93 | 0.69 | 1.47 | 1.14 | 1.08 | 1.10 |
| nm | $\lambda D$ | 560.8 | 556.1 | 559.8 | 557.9 | 561.9 | 552.1 | 562.9 | 560.2 | 561.5 | 561.3 | 560.9 |
| % | Pe | 22.1 | 18.1 | 19.6 | 17.8 | 21.9 | 14.2 | 26.3 | 16.4 | 19.3 | 20.2 | 19.2 |

[Table 4]

|  |  | Ex. 34 | Ex. 35 | Ex. 36 | Ex. 37 | Ex. 38 | Ex. 39 | Ex. 40 | Ex. 41 |
|---|---|---|---|---|---|---|---|---|---|
| mass% | FeO | 0.36 | 0.30 | 0.41 | 0.60 | 0.84 | 0.36 | 0.68 | 0.68 |
| mass% | $Fe_2O_3$ | 1.30 | 1.24 | 1.12 | 2.24 | 0.19 | 0.88 | 1.95 | 1.95 |
| mass% | $t\text{-}Fe_2O_3$ | 1.70 | 1.57 | 1.58 | 2.90 | 1.12 | 1.28 | 2.70 | 2.70 |
| mass% | $TiO_2$ | 2.78 | 1.19 | 1.74 | 1.80 | 1.40 | 1.71 | 3.40 | 2.80 |
| mass% | $CeO_2$ | 0 | 1.30 | 0.44 | 0.00 | 0.00 | 0.00 | 0 | 0 |
| mass% | CoO | 0.0225 | 0.0239 | 0.0261 | 0.0095 | 0.0243 | 0.0318 | 0.0282 | 0.0282 |
| mass% | Se | 0.0026 | 0.0012 | 0.0013 | 0 | 0 | 0.0009 | 0.0004 | 0.0004 |
| mass% | $Cr_2O_3$ | 0.0049 | 0 | 0 | 0 | 0 | 0 | 0.0026 | 0.0026 |
| mass% | NiO | 0 | 0.0109 | 0.0109 | 0 | 0 | 0 | 0 | 0 |
| mass% | $CoO+Se+Cr_2O_3$ | 0.0300 | 0.0251 | 0.0274 | 0.0095 | 0.0243 | 0.0327 | 0.0312 | 0.0312 |
|  | $FeO\times TiO_2$ | 1.00 | 0.35 | 0.72 | 1.07 | 1.18 | 0.62 | 2.30 | 1.89 |
|  | $t\text{-}Fe_2O_3/TiO_2$ | 0.61 | 1.32 | 0.91 | 1.61 | 0.80 | 0.75 | 0.79 | 0.96 |
| % | Fe-redox | 23.5 | 21 | 29 | 22.8 | 83.5 | 31.3 | 27.8 | 27.8 |
|  | A | -6.34 | -5.16 | -5.07 | -9.11 | -1.51 | -4.18 | -9.04 | -8.68 |
| % | TVA | 21.1 | 20.7 | 18.9 | 20.9 | 31.1 | 24.5 | 14.3 | 14.6 |
| % | TE | 19.2 | 20.5 | 15.0 | 10.3 |  | 22.1 | 7.8 | 8.0 |
| % | TUV380 | 0.7 | 0.23 | 0.31 | 0.15 | 14.4 | 5.4 | 0.04 | 0.08 |
| % | TUV400 | 2.3 | 1.55 | 1.62 | 0.45 |  | 10.4 | 0.45 | 0.64 |
| nm | λD |  |  |  |  |  | 485.3 | 562.9 | 558.0 |
| % | Pe |  |  |  |  |  | 14.3 | 32.6 | 29.0 |

Examples 1 to 33 and Examples 40 to 41 are invention examples, and Examples 34 to 39 are comparative examples. Example 34 was extracted from Examples described in Patent Document 1 (WO 2015/088026), Examples 35 to 37 were extracted from Examples described in Patent Document 2 (WO 2016/088374), Example 38 was extracted from Examples described in Patent Document 3 (US-A-2004/0038799), and the optical characteristics at a sheet thickness of 2.8 mm were obtained with the reflectivity set to 8%.

TUV380 of Patent Document 2 is the ultraviolet transmittance defined by ISO 9050:1990, but was compared as the same ultraviolet transmittance as TUV380 in the present specification. In addition, the ultraviolet transmittance of Patent Document 3 is the ultraviolet transmittance measured in accordance with a Parry Moon Air Mass=2, but was compared as the same ultraviolet transmittance as TUV380 in the present specification.

Each glass of Examples 1 to 33 and Examples 40 to 41, which satisfied all of the conditions regarding the glass composition, satisfied the conditions regarding the optical characteristics at a sheet thickness of 2.8 mm. In addition, since the content of $CeO_2$ was 0.4% or less in all of these examples, the raw material costs were inexpensive. Furthermore, since $t\text{-}Fe_2O_3$ was 2.8% or less, the solubility was favorable.

Each glass of Example 34 and Example 39 had $FeO\times TiO_2$ of less than 1.1 and thus failed to satisfy TUV400.

Each glass of Examples 35 and 36 satisfied the conditions regarding the optical characteristics, but had the content of $CeO_2$ of more than 0.4% and thus raw material costs were high.

Glass of Example 37 satisfied the conditions regarding the optical characteristics, but had $t\text{-}Fe_2O_3$ of more than 2.8% and thus had poor solubility.

Glass of Example 38 had $t\text{-}Fe_2O_3$ of less than 1.2% and thus had a high ultraviolet transmittance.

While the present invention has been described in detail and by reference to the specific embodiments, it is apparent to one skilled in the art that various modifications or changes can be made without departing the spirit and scope of the present invention.

This application is based on Japanese Patent Application (No. 2016-176180) filed on September 9, 2016 and Japanese Patent Application (No. 2017-166411) filed on August 31, 2017, the disclosure of which is incorporated herein by reference in its entity.

**Claims**

1. A ultraviolet absorbing glass comprising, in terms of percent by mass based on oxides:

| | |
|---|---|
| $SiO_2$ | 62% to 75%, |
| $Na_2O$ | 10% to 20%, |
| CaO | 5% to 15%, |
| MgO | 0 to 6%, |
| $Al_2O_3$ | 0 to 5%, |
| $K_2O$ | 0 to 5%, |
| FeO | 0.13% to 0.9%, |
| total iron in terms of $Fe_2O_3$ | 1.2% to 2.8%, |
| $TiO_2$ | 1.3% to 5%, |
| $CeO_2$ | 0 to 0.4%, |
| CoO | 0.01% to 0.05%, |
| Se | 0 to 0.007%, |
| $Cr_2O_3$ | 0 to 0.08%, and |
| NiO | 0 to 0.2%, |

satisfying a product (FeO$\times$$TiO_2$) of the content of FeO and the content of $TiO_2$ being 1.1 to 4.5,
having a visible light transmittance (TVA) based on a standard illuminant A at a sheet thickness of 2.8 mm being 8% to 25%, and
having an ultraviolet transmittance (TUV400) defined by ISO 13837:2008 convention A at a sheet thickness of 2.8 mm being 2.0% or less.

2. The ultraviolet absorbing glass according to Claim 1, comprising, in terms of percent by mass based on oxides, the total iron in terms of $Fe_2O_3$ being 1.2% or more and less than 2.4%.

3. The ultraviolet absorbing glass according to Claim 1 or 2, having the ultraviolet transmittance (TUV400) defined by ISO 13837:2008 convention A at a sheet thickness of 2.8 mm being 1.0% or less.

4. The ultraviolet absorbing glass according to any one of Claims 1 to 3, having an ultraviolet transmittance (TUV380) defined by ISO 9050:2003 at a sheet thickness of 2.8 mm being 0.5% or less.

5. The ultraviolet absorbing glass according to any one of Claims 1 to 4, wherein a value obtained by dividing the content of the total iron in terms of $Fe_2O_3$ (t-$Fe_2O_3$) by the content of $TiO_2$ (t-$Fe_2O_3$/$TiO_2$) is 0.5 to 1.0.

6. The ultraviolet absorbing glass according to any one of Claims 1 to 5, wherein a mass proportion of divalent iron in terms of $Fe_2O_3$ in the total iron in terms of $Fe_2O_3$ is 10% to 40%.

7. The ultraviolet absorbing glass according to any one of Claims 1 to 6, having an energy transmittance (TE) defined by JIS-R3106:1998 at a sheet thickness of 2.8 mm being 28% or less.

8. The ultraviolet absorbing glass according to any one of Claims 1 to 7, wherein a content of an oxide of trivalent iron represented by $Fe_2O_3$ in percent by mass and the content of $TiO_2$ in percent by mass satisfies the following expression:

$$-3.58\times(Fe_2O_3)-0.606\times(TiO_2) \leq -2.0.$$

Europäisches
Patentamt

European
Patent Office

Office européen
des brevets

# EUROPEAN SEARCH REPORT

Application Number

EP 17 00 1507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2016/088374 A1 (NIPPON SHEET GLASS CO LTD [JP]) 9 June 2016 (2016-06-09) * claims 1-16; examples 1-25 * ----- | 1-8 | INV. C03C3/087 C03C4/02 C03C4/08 |
| A | US 2016/229735 A1 (AKADA SHUICHI [JP]) 11 August 2016 (2016-08-11) * claims 1-20; examples 1-24 * ----- | 1-8 | |

TECHNICAL FIELDS SEARCHED (IPC)

C03C

The present search report has been drawn up for all claims

| Place of search | Date of completion of the search | Examiner |
|---|---|---|
| Munich | 30 October 2017 | Wrba, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 00 1507

This annex lists the patent family members relating to the patent documents cited in  the above-mentioned European search report.
The members are as contained in the European Patent Office EDP file on
The European Patent Office is in no way liable for these particulars which are merely given for the purpose of information.

30-10-2017

| Patent document<br>cited in search report | | Publication<br>date | Patent family<br>member(s) | | Publication<br>date |
|---|---|---|---|---|---|
| WO 2016088374 | A1 | 09-06-2016 | CN | 107001118 A | 01-08-2017 |
| | | | EP | 3228603 A1 | 11-10-2017 |
| | | | JP | WO2016088374 A1 | 14-09-2017 |
| | | | WO | 2016088374 A1 | 09-06-2016 |
| US 2016229735 | A1 | 11-08-2016 | CN | 105814001 A | 27-07-2016 |
| | | | EP | 3081542 A1 | 19-10-2016 |
| | | | JP | WO2015088026 A1 | 16-03-2017 |
| | | | US | 2016229735 A1 | 11-08-2016 |
| | | | WO | 2015088026 A1 | 18-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015088026 A
- WO 2016088374 A
- US 20040038799 A
- JP 2016176180 A
- JP 2017166411 A